# EUROPEAN PATENT APPLICATION

(11) **EP 3 160 177 A1**
(43) Date of publication of application: **26.04.2017**
(21) Application number: 15306704.6
(22) Date of filing: 23.10.2015
(51) Int. Cl.: H04W 12/06, H04W 12/08, H04W 12/00

(54) **METHOD, SERVER AND SYSTEM FOR MANAGING A SUBSCRIBER TO A FIRST NETWORK**

(71) Applicant: GEMALTO SA, 92190 Meudon (FR)
(72) Inventor: ZANNIN, François, 13881 GEMENOS Cedex (FR); TROADEC, Hervé, 13881 GEMENOS Cedex (FR); MAVRAKIS, Daniel, 13881 GEMENOS Cedex (FR)
(74) Representative: Scheer, Luc

(57) **Abstract**

The invention relates to a method 20 for managing a subscriber to a first network.

According to the invention, the method comprises the following steps. A token 12 is coupled or connected to a device 16. The token determines and sends at least one identifier 24 relating to the device, through the first or a second network, to a first server 106. The first server receives at least one identifier relating to the token and the at least one identifier relating to the device. The first server verifies 26 whether the at least one identifier relating to the device is or is not authorized to be used in association with the at least one identifier relating to the token. Only if the at least one identifier relating to the device is not authorized, the first server or a second server sends to a HLR type entity 104 information 28 relating to an attachment to the first or the second server accompanied with the at least one identifier relating to the token. The HLR type entity sends to a VLR type entity 112 a removal request 210 for removing the identifier relating to the token from a database accompanied with the at least one identifier relating to the token. The token sends to the VLR type entity an attachment request 212 for attaching to the first or the second network accompanied with the at least one identifier relating to the token. The VLR type entity sends, through the first or the second server, to the HLR type entity a network attachment request 214 for attaching to the first or the second network accompanied with the at least one identifier relating to the token. The first or the second server intercepts the network attachment request without forwarding to the HLR type entity the network attachment request. And the first or the second server sends to the VLR type entity predetermined first information 218, the first information allowing to forbid an attachment by the device, through the token, to the first or the second network.

The invention also relates to corresponding server and system.

## Description

### Field of the invention:

The invention relates generally to a method for managing a subscriber to a first network.

The present invention is applicable in the field of radio-communications. In such a field, a subscriber owns a Subscriber Identifier Module (or SIM) type card, as a removable token or Secure Element (or SE), that may be inserted in a Machine-to-Machine (or M2M), a mobile (tele)phone and/or the like, as a token host device.

Within the present description, a token or an SE is a smart device that includes a chip that protects, as a tamper resistant component, access to stored data and is intended to communicate data with the outside world, like e.g. an SE host device.

Furthermore, the invention also pertains to a server for managing a subscriber to a first network.

Lastly, the invention relates to a system for managing a subscriber to a first network as well.

### State of the art:

It is known that a SIM type card that is included within a traffic light, as an M2M and a first (SE) host device, may be stolen from the traffic light and inserted in a mobile phone, as a second (SE) host device. Once inserted in the second host device, the SE is used fraudulently to attach to a mobile network, so as to make free phone communications.

However, firstly, once the SE is removed from the traffic light, the traffic light does no more operate and may prevent a corresponding traffic light network from being synchronized. It is very expensive for a traffic light network operator to resynchronize the traffic light network.

Secondly, a corresponding mobile network operator is not paid for the made phone communications by using the mobile phone. It is very expensive for the mobile network operator, in terms of loss of money that should have been paid for corresponding provided communication services.

There is a need to provide a solution that allows preventing a fraudulent use of a SIM type card in an unauthorized device without having been paid for corresponding provided communication services.

### Summary of the invention:

The invention proposes a solution for satisfying the just herein above specified need by providing a method for managing a subscriber to a first network.

According to the invention, the method comprises the following steps. A token is coupled or connected to a device. The token determines and sends at least one identifier relating to the device, through the first or a second network, to a first server. The first server receives at least one identifier relating to the token and the at least one identifier relating to the device. The first server verifies whether the at least one identifier relating to the device is or is not authorized to be used in association with the at least one identifier relating to the token. Only if the at least one identifier relating to the device is not authorized, the first server or a second server sends to a Home Location Register or HLR type entity information relating to an attachment to the first or the second server accompanied with the at least one identifier relating to the token. The HLR type entity sends to a Visitor Location Register or VLR type entity a removal request for removing the identifier relating to the token from a database accompanied with the at least one identifier relating to the token. The token sends to the VLR type entity an attachment request for attaching to the first or the second network accompanied with the at least one identifier relating to the token. The VLR type entity sends, through the first or the second server, to the HLR type entity a network attachment request for attaching to the first or the second network accompanied with the at least one identifier relating to the token. The first or the second server intercepts the network attachment request without forwarding to the HLR type entity the network attachment request. And the first or the second server sends to the VLR type entity predetermined first information, the first information allowing to forbid an attachment by the device, through the token, to the first or the second network.

The principle of the invention consists in that a server receives one or several identifiers relating to a token and one or several identifiers relating to a device with which the token cooperates. The server analyzes whether the device identifier(s) is(are) or not authorized with the token identifier(s). When not authorized, the (or another) server transmits to an HLR type entity information relating to an attachment to the server (or the like) (and not to the network that covers the device) along with the token identifier(s). The HLR type entity transmits to a VLR type entity a request for deleting or erasing the token identifier(s) from a database. The token transmits to the VLR type entity a network attachment request along with the token identifier(s). The VLR type entity transmits, through the (or another) server, to the HLR type entity a network attachment request along with the token identifier(s). The (or another) server intercepts, without re-transmitting to the HLR type entity, the network attachment request along with the token identifier(s). The (or another) server transmits to the VLR type entity data for preventing the (identified) device from attaching, through the token, to the network.

The involved server detects thus that an identified cooperating device is not authorized. Then, the server (or another server) informs the HLR type entity that the identified token is already attached to the server (or the like), as a fake (network) attachment. Such a fake attachment allows discharging or freeing, under the HLR type entity control, the VLR type entity that should have been in charge, instead of the server (or another server or the like), of the token. The server (alone or with another server) plays notably a role of a proxy HLR type entity and a fake VLR type entity. Then, the HLR type entity requests the VLR type entity to delete the concerned token identifier(s) from a database that registers the token identifier(s).

Once the token that is associated with the unauthorized device attempts to attach to the concerned network, the VLR type entity addresses, via the server, to the HLR type entity without reaching this latter. Then, the VLR type entity receives from the server, instead of the HLR type entity, data to forbid access to the token. Thus, the token is rejected and therefore unable to attach to the concerned network.

It is noteworthy that the involved VLR type entity may be related to either the first network, like e.g. a home (mobile) (radio-communication) network, i.e. in a home context, or a second network, like e.g. a non-home or foreign network, in a roaming context.

Within the present document, the word "roaming" means that a subscriber token is attached to a first network, like e.g. the home network, and then to a second network, like e.g. a non-home (or foreign) network.

The invention method is automatically implemented.

A subscriber, as a user of the token that implements the invention method, is not involved to detect that its host device is(are) or is not an authorized device.

The invention method is therefore transparent to the subscriber.

The invention method allows detecting quickly notably that a (token host) device is an unauthorized device (or the like) and preventing the unauthorized device from attaching to the network that covers the unauthorized device.

The invention method allows using the token only with a cooperating device that is allowed by the server to cooperate with the token. The invention method allows thus avoiding the use of a stolen token with any unauthorized cooperating device.

As soon as the device is detected as being unauthorized, the invention method allows preventing the device from attaching to the concerned network, irrespective of whether the network is a home or non-home network.

The first (and possibly the second) network operator that operates the first (and the second respectively) network is(are) not involved to detect that a (token host) device is an unauthorized one.

The invention method allows suspending or stopping rapidly a subscriber activity without any manual intervention notably at an HLR type entity side, so as to use any service provided by the network that is solicited for an attachment by a subscriber token in association with an unauthorized device.

The invention solution is compatible with the existing network infrastructure since the invention method does modify neither an HLR type entity operation nor a VLR type entity operation.

The invention method allows rejecting either statically, i.e. when present in a place accessible from a home or a non-home network during a boot of the chip, or dynamically, i.e. when moving the token from a first to a second network notably when the device is also changed during the network change from an authorized to an unauthorized device.

The invention method allows rejecting, in an efficient, quick and simple manner, an unauthorized device without money losses for the first and possibly a second network operator.

Preferably, the token is used with one or several predetermined authorized devices. The token stores one or several identifiers relating to each of the predetermined authorized device(s). Prior to sending the token identifier(s) and the device identifier(s), the token compares each device identifier to an identifier relating to the predetermined authorized device(s). Only if no device identifier matches an identifier relating to the predetermined authorized device(s), the token sends, through the first or the second network, to the first server the token identifier(s) and the device identifier(s).

Preferably, the token is used with one or several predetermined authorized devices. The token stores one or several identifiers relating to a last previously active authorized device. Prior to sending the token identifier(s) and the device identifier(s), the token compares each device identifier to the identifier relating to the last previously active authorized device. Only if no device identifier matches the identifier relating to the last previously active authorized device, the token sends, through the first or the second network, to the first server the token identifier(s) and the device identifier(s).

According to a further aspect, the invention is a server for managing a subscriber to a first network.

According to the invention, the server is configured to receive at least one identifier relating to the token and at least one identifier relating to the device. The server is configured to verify whether the at least one identifier relating to the device is or is not authorized to be used in association with the at least one identifier relating to the token. The server is configured to send, only if the at least one identifier relating to the device is not authorized, to a Home Location Register or HLR type entity information relating to an attachment to the first or the second server accompanied with the at least one identifier relating to the token. The server is configured to intercept a network attachment request for attaching to the first or the second network accompanied with the at least one identifier relating to the token. The network attachment request originates from a Visitor Location Register or VLR type entity and being addressed to the HLR type entity. The server is configured not to forward to the HLR type entity the network attachment request. And the server is configured to send to the VLR type entity predetermined first information. The first information allows to forbid an attachment by the device, through the token, to the first or the second network.

According to still a further aspect, the invention is a system for managing a subscriber to a first network.

According to the invention, the system comprises at least one server and a token. The token is configured to be coupled or connected to a device. The token is configured to determine and send at least one identifier relating to the device, through the first or a second network, to a first server. The at least one server is configured to receive at least one identifier relating to the token and at least one identifier relating to the device. The at least one server is configured to verify whether the at least one identifier relating to the device is or is not authorized to be used in association with the at least one identifier relating to the token. The at least one server is configured to send, only if the at least one identifier relating to the device is not authorized, to a Home Location Register or HLR type entity information relating to an attachment to the first or the second server accompanied with the at least one identifier relating to the token. The token is configured to send to a Visitor Location Register or VLR type entity an attachment request for attaching to the first or the second network accompanied with the at least one identifier relating to the token. The at least one server is configured to intercept a network attachment request for attaching to the first or the second network accompanied with the at least one identifier relating to the token. The network attachment request originates from the VLR type entity and being addressed to the HLR type entity. not to forward to the HLR type entity the network attachment request. And the at least one server is configured to send to the VLR type entity predetermined first information. The first information allows to forbid an attachment by the device, through the token, to the first or the second network.

### Brief description of the drawings:

Additional features and advantages of the invention will be more clearly understandable after reading a detailed description of one preferred embodiment of the invention, given as one indicative and non-limitative example, in conjunction with the following drawings:

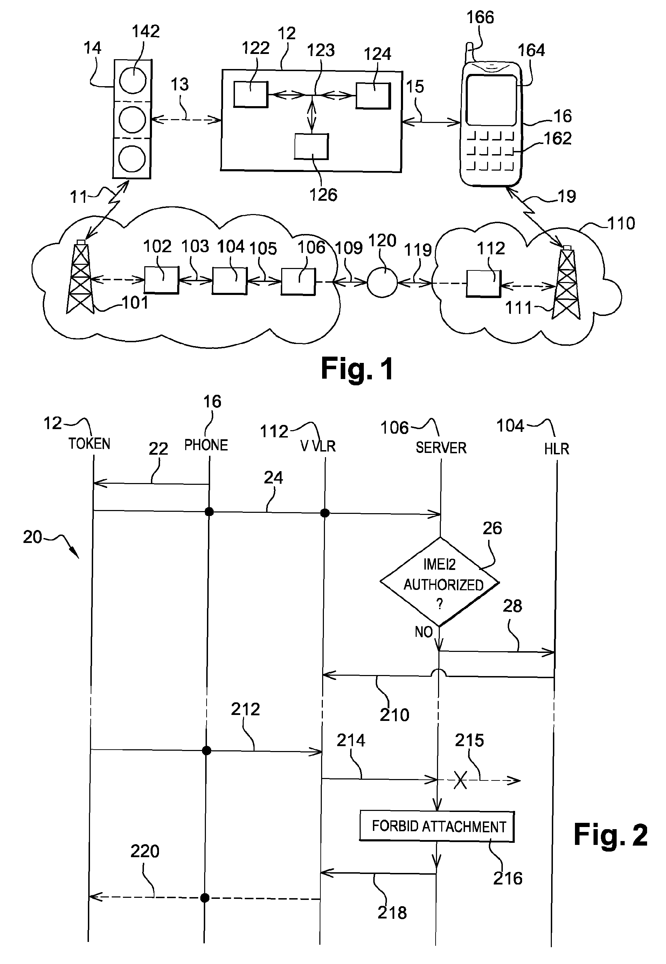

- Figure 1 illustrates a simplified diagram of a home network with an HLR type entity, and, according to one invention embodiment, a proxy-HLR type entity, as a server, and a foreign network with a Visited VLR type entity, so that the server rejects a user terminal, as an unauthorized device, that cooperates with a token that is initially tied to a terminal, as an authorized device; and
- Figure 2 represents one simplified message flow between the token, the V VLR type entity, the HLR type entity and the server of the figure 1, so that the server is configured to detect, in cooperation with the token, the unauthorized device and to let reject, via the V VLR type entity, the token.

### Detailed description:

Herein under is considered a case in which the invention method for managing a subscriber to a home network, as a first network, is implemented by a server that allows forbidding a use of a mobile phone, as a user terminal and an unauthorized device, in cooperation with a SIM type card, as a token, in a foreign network, as a second network.

According to another embodiment (not represented), the invention method for managing a subscriber to a home network, as a first network, is implemented by a server that allows forbidding a use of a terminal or a user terminal, as an unauthorized device, in cooperation with a token, in the home network comprising a VLR type entity. According to such an embodiment, the token, an HLR type entity and a server exchanges, through a VLR type entity relating to the home network, instead of the Visited VLR (or V VLR) type entity relating to the foreign network of the described embodiment. The token and the server relating to such another embodiment are configured to exert the functions that are described infra and that are carried out by the token and the server relating to the described embodiment respectively.

Naturally, the herein below described embodiment is only for exemplifying purposes and is not considered to reduce the scope of the invention.

**Figure 1** shows schematically a SIM type card 12 that cooperates firstly with a traffic light 14 under a radio coverage of a home (mobile) network 100 and secondly with a mobile phone 16 under a radio coverage of a foreign (mobile) network 110.

The SIM type card 12, as a token, includes a chip (not represented) that is under control of a token host device at the client side and under control of a Home Location Register (or HLR) type entity 104 that is termed HLR infra, as a (remote) server 104 of the home network 100.

Instead of a SIM type card, the removable token may be a smart dongle of the USB (acronym for "Universal Serial Bus") type, a (micro)Secure Digital (or SD) type card or a Multi-Media type Card (or MMC) or any chip medium to be connected or coupled, through a contact and/or a contact-less link, to a token host device, or a chip that is soldered or fixed, in a removable manner, to a Printed Circuit Board (or PCB) of a token host device.

The token 12 (chip) includes a (micro)processor(s) (and/or a (micro)controller(s)) 122, as data processing means, a memory(ies) 124, as data storing means, and one or several Input/Output (or I/O) interfaces 126 that are internally all connected, through an internal bidirectional data bus 123, to each other.

The microprocessor 122 processes, controls and communicates internally data with all the other components incorporated within the chip and, through the I/O interface(s) 126, with the chip exterior.

The microprocessor 122 executes or runs one or several applications including the subscription manager.

The I/O interface(s) 126 allow(s) communicating data from the internal chip components to the chip exterior and conversely.

The memory 124 stores data relating to one or several subscriptions to one or several (mobile) networks, as a wireless service(s).

For each subscription to a (mobile) home network 100, as a first network, a corresponding set of subscription data includes:
- an International Mobile Subscriber Identity (or IMSI), as an identifier relating to the token 12 and a subscriber to the network 100;
- a key Ki, as a network authentication key, allowing to authenticate the concerned subscriber to the network 100;
- Milenage, as an authentication algorithm, allowing to authenticate the concerned subscriber to the network 100;
- one or several passwords, like e.g. a Personal Identity Number (or PIN), and/or one or several cryptographic algorithms, as data relating to a secret(s) that is(are) securely stored within the token 12;
- a file system including one or several Elementary Files (or EF);
- one or several security keys, like e.g. a key(s) for encrypting/decrypting data and/or a key(s) for signing data a key(s);
- one or several applicative keys, like e.g. a key for accessing a user bank account; and/or
- one or several credentials, like e.g. a user name and/or an IDentifier (or ID) of the subscriber, as data relating to the user.

For the sake of simplicity, the memory 124 stores, for instance, only one set of subscription data including an IMSI1.

The invention is still applicable, when, instead of only one subscription, the token 12 includes several subscriptions, namely IMSI1, IMSI2 or more, between which the token 12 may switch while deactivating a current subscription and activating another subscription.

The memory 124 may store one or several identifiers, like e.g. a Traffic Light Identifier(s) (or TLI) and/or an International Mobile station Equipment Identity(ies) (or IMEI), relating to one (or several) predetermined authorized (token host) device(s), or a type of one or several identifiers relating to a predetermined authorized device(s), like e.g. a TLI or an IMEI, as one or several identifiers relating to one or several predetermined authorized devices.

The identifier(s) relating to one or several predetermined authorized devices, as a configuration parameter, may have been loaded during a manufacturing process or, after the token 12 issuance, remotely from a server, like e.g. a (remote) server 106, as a device controller.

The memory 124 stores preferably data relating to a Uniform Resource Identifier (or URI), a Uniform Resource Locator (or URL) and/or an Internet Protocol (or IP) type address of an external entity to be addressed, like e.g. the server 106.

The memory 124 stores an Operating System (or OS).

The microprocessor 122 is preferably able to initiate actions, in order to interact directly with the outside world, in an independent manner of the token host device. Such a capacity of interaction at the initiative of the token 12 is also known as a proactive capacity. According to one preferred embodiment, the token 12 is able to use SIM ToolKit (or STK) type commands, as proactive commands.

The memory 124 stores preferably one or several Subscriber Identity Module (or SIM) type applications.

The SIM type application(s) includes, among others, a SIM application for a Global System for Mobile communications (or GSM) type network, a Universal Subscriber Identity Module (or USIM) application for a UMTS type network, a CDMA SIM (or CSIM) application and/or an Internet protocol Multimedia Subsystem (or IMS) SIM (or ISIM) application.

The SIM type application(s) allow(s) the token 12 to identify and preferably authenticate to one or several mobile networks 100 by using the IMSI1.

To authenticate to the home network 100, the SIM type application(s) use(s) preferentially the network authentication key Ki relating to the subscription. When the token 12 fails to authenticate to the network 100, the token 12 and its (currently cooperating) device are not allowed to benefit from any communication service offered through or by the home network 100 (due to a cooperation of the token 12 with an unauthorized device).

The memory 124 stores one or several additional applications. Among the supported applications, the memory 124 stores an application termed host device identifier tracker.

The host device identifier tracker allows the token 12 to detect or determine from its (current host) device one or several identifiers relating to the device by getting it or them from the device. Once the token 12 has identified the device, the token 12 is configured to send, at its own initiative, to the token host device, a proactive command for sending to the server 106 a message(s), like e.g. a Short Message Service (or SMS), an Unstructured Supplementary Service Data (or USSD) and/or a data type message(s) or the like, including the identifier(s) relating to the device.

The token 12 includes one or several I/O interfaces for exchanging data, over a contact and/or a contact-less link 13, with the device, like e.g. the traffic light 14.

The "contact-less" adjective means that each of the token 12 and the device is connected to or includes means for communicating data while using preferably a Short Range (or SR) Radio-Frequency (or RF) link. The SR RF link may be related to any technology that allows the token 12 to exchange data with the device. The SR RF may be fixed at 13,56 MHz and related to a Near Field Communication (or NFC) type technology or the like, as a contact-less technology.

Among the supported applications, the memory 124 may store an application termed host device controller by which the token 12 is intended to be used with one or several predetermined (identified) authorized devices. The token 12 stores one or several identifiers relating to each of the predetermined authorized device(s). Thanks to the host device controller, the token 12 is configured to compare the identifier(s) relating to the (current) device to one or several of the (stored) identifier(s) relating to the predetermined authorized device(s). If the identifier relating to the device matches a (stored) identifier relating to a predetermined authorized device, then the token 12 determines that the device is a predetermined authorized device and does not need to send to the server 106 any identifier relating to the device. Otherwise, namely if the identifier(s) relating to the device does not match any of the identifier(s) relating to the predetermined authorized device(s), the token 12 sends, through the home 100 or the non-home 110 network, to the server 106 the identifier(s) relating to the device.

Among the supported applications, the memory 124 may store an application termed changed host device controller by which the token 12 triggers a sending of the identifier(s) relating to the device if the device is not the last previously active authorized device. The token 12 stores one or several identifiers relating to a last previously active authorized device. Thanks to the changed host device controller, the token 12 is configured to compare the identifier(s) relating to the (current) device to the (stored) identifier(s) relating to the last previously active authorized device. If the identifier(s) relating to the device match(es) the identifier(s) relating to the last previously active authorized device, then the token 12 determines that the device is the last previously active authorized device and does not need to send to the server 106 any identifier relating to the device. Otherwise, namely if the identifier(s) relating to the device does not match any of the identifier(s) relating to the last previously active authorized device, the token 12 sends, through the home 100 or the non-home 110 network, to the server 106 the identifier(s) relating to the device.

The token 12 registers e.g. the traffic light 14, as an authorized device. The token 12 is e.g. removable from the traffic light 14, as a first (token host) device.

Instead of a traffic light, the first token host device may be, among others, a mobile phone, a mobile laptop, a tablet, a Personal Digital Assistant (or PDA), a mobile TeleVision appliance, a game console, a Personal Computer (or PC), a set-up box and/or a netbook, as an electronic device that needs to identify and authenticate preferably to the home network 100.

The token 12 may cooperate with another token host device that is to be authorized or forbidden by the server 106 to cooperate with the token 12.

The token 12 is able to send to a (covering) mobile network, and more exactly a Visited Location Register (or VLR) type entity that is termed VLR infra, a network attachment request for attaching to the network along with the IMSI1, as the token identifier.

The covering mobile network covers, in a wireless manner, the token 12 and the (token host) device.

The token 12 is able to receive from the (covering) network a network attachment response, as a response to a previously sent network attachment request. The network attachment response may include information allowing to authorize or forbid the token 12 to attach to the network under which the token 12 is covered through an RF link.

The traffic light 14 includes one or several colored traffic lights 142, such as e.g. a red, a yellow (or orange) and/or a green traffic light.

The traffic light 14 may be situated at crossroads (or the like). The traffic light 14 is preferably immobile.

The traffic light 14 may be included within a traffic light infrastructure that runs automatically, i.e. without any constant human observation.

The traffic light 14 and possibly other traffic lights comprised within the traffic light infrastructure may be remotely controlled through the home network 100.

The traffic light 14 may include a (micro)controller(s) or a (micro)processor(s) (not represented), as data processing means, one or several memories (not represented), as data storing means, and one or several I/O interfaces (not represented).

The (traffic light) controller processes, controls and communicates internally data with all the other components included within the traffic light 14 and, through the I/O interface(s), with outside of the traffic light 14.

A traffic light memory stores preferably a TLI1, an IMEI1 and/or the like, as an identifier(s) relating to the traffic light 14.

The traffic light 14 uses the token 12, so as to provide one or several particular wireless communication services, such as e.g. an SMS, an Internet Protocol (or IP) type communication service(s) and/or the like, that are accessible through the home network 100.

The traffic light 14 constitutes a so-termed box or Machine of an M2M type infrastructure that includes a fleet of Machines.

The traffic light 14 includes or is connected to a modem. The modem allows exchanging data, over one or several Long Range (or LR) RF links, as wireless links, between the traffic light 14 and the home network 100.

The home network 100 may include a General Packet Radio Service (or GPRS) core network that allows a second Generation (or 2G) and/or a third Generation (or 3G) type network(s) to transmit IP packets to one or several external networks, like e.g. an Internet type network (not represented). The GPRS core network includes a Serving GPRS Support Node (or SGSN) (not represented).

The home network 100 includes one or several Base Transceiver Station (or BTS) type entities 101.

The BTS 101 allows exchanging data, over a wireless link 11, with the traffic light 14 and the token 12.

The home network 100 includes a Mobile Switching Center (or MSC) and a VLR type entity that is termed VLR infra.

The MSC is connected, within the home network 100, to the BTS 101.

The MSC is able to route calls, messages and data intended to and/or originating from the subscriber traffic light 14 in the area that is managed by the MSC.

The MSC is able to connect outgoing calls to other addressed subscribers.

The MSC is able to carry out handovers between the MSC to a target MSC. The MSC is an original MSC, i.e. the MSC that manages a call, data communication with the traffic light 14, as an authorized subscriber device and possibly the last previously active authorized device, that is attached to the target MSC.

The MSC processes any incoming message originating from a terminal, like e.g. the traffic light 14.

The MSC serves the traffic light 14 and the token 12. The MSC is connected to or integrated within the VLR that is represented as one and the same network entity 102. The MSC may interrogate the VLR to determine where the concerned subscriber is located.

The MSC is able to deliver calls, messages to a subscriber as soon as the subscriber arrives based on data originating from the VLR 102.

The VLR 102 includes a database of subscribers.

The subscriber database includes preferably the IMSI1, as an identifier relating to the token 12 which roams into an area that the MSC serves and manages through a radio coverage relating to the BTS 101.

Additionally or alternately, the subscriber database may include other information relating to each subscriber, like e.g. a Mobile Station International Subscriber Directory Number (or MSISDN), as a number used for identifying the subscriber, authentication data, a service(s) that the subscriber is allowed to access, a HLR address relating to the subscriber, a General Packet Radio Service (or GPRS) access point and/or other data. The GSM service(s) may include an SMS and/or a (phone) call service.

The VLR 102 processes any incoming request originating from a terminal, like e.g. the traffic light 14, to attach to the home network 100.

The VLR 102 updates the database by adding a subscriber that arrives in the area managed through the VLR 102. The VLR 102 is able to track where the subscriber is within the VLR area, as a location area, when no call is ongoing. The VLR 102 is preferably able to allocate a roaming number during a processing of an incoming call.

The VLR 102 is preferably able to delete or remove, under an HLR request, a record relating to a subscriber within a set of subscribers included in the database. The subscriber record includes one or several identifiers relating to the token 12, like e.g. IMSI1.

The VLR 102 is preferably able to allow or disallow one or several services that the subscriber may use.

The VLR 102 may be connected to a SGSN (not represented).

The SGSN is connected to a Gateway GPRS Support Node (or GGSN), as a router to an Internet type network, as a sub-network. The traffic light 14 is able to exchange with the SGSN data packets within its geographical service area. The SGSN allows routing data packets. The SGSN stores preferably location information, like e.g. an identified current cell and/or an identified current VLR type entity. The SGSN allows providing the traffic light 14 with an IP type communication service.

The VLR 102 is connected, through a wire link 13, to the HLR 104.

The HLR 104 includes a central database.

The database includes data relating to each subscriber including IMSI1, as an identifier relating to the token 12, that is authorized to access one or several service provided by or through the home network 100. The database may include other data that is associated with the token identifier, like e.g.:
- a GSM communication service(s) that the subscriber has requested or has been allowed;
- a GPRS setting(s) to allow the subscriber to access a data packet communication service;
- a current location of the subscriber, like e.g. the VLR 102 and the associated SGSN.

The HLR 104 is used to manage the mobility of the subscribers by updating their location in geographical Location Areas (or LAs).

The HLR 104 sends subscriber data to a VLR or a SGSN when the concerned subscriber roams to an area that is served by the VLR or the SGSN.

The HLR 104 removes subscriber data from a previous VLR (that has served the concerned subscriber) when the concerned subscriber has left the previous VLR.

The HLR 104 is preferably able to provide, when requested, routing information including an IMSI, in order to route a call to the subscriber.

The MSC 102 is able to obtain from the HLR 104 data about the network subscribers, like e.g. the IMSIs, as identifiers relating to the associated tokens, and about their associated token host devices, like e.g. the TLIs, the IMEIs and/or the MSISDNs, that allows a home network entity(ies) to retrieve subscriber identification data.

The home network 100, as a first network, is connected, over a wire link 109, to a Gateway (or GW) 120.

The token 12 may be inserted in the phone 16, as a second (token host) device with which the token 12 is to be forbidden to operate.

Instead of a phone, the second token host device may be, among others, an M2M, a mobile laptop, a tablet, a PDA, a mobile TeleVision appliance, a game console, a PC, a set-up box and/or a netbook, as an electronic device that needs to identify and authenticate preferably to the home network 100.

The token 12 is connected, through a bi-directional link 15, to the phone 16, so as to cooperate with the token 12.

The phone 16 includes preferably a keyboard 162 and a display screen 164, as a phone Man Machine Interface (or MMI).

Alternatively, instead of a physical keyboard separated from the display screen, the phone 16 is equipped with a touch sensitive display screen, as a virtual keyboard.

The phone MMI allows a phone user to interact with the phone 16.

The phone 16 includes one or several (micro)processors, as data processing means, one or several memories, as data storing means, and one or several I/O interfaces that are linked all together through a control and data bus (not represented).

The phone memory(ies) stores an IMEI2 and/or the like, as one or several identifiers relating to the phone 16.

The phone 16 plays, in a preferential manner, a role of a modem, so as to exchange, in a wireless manner, data with a mobile network, like e.g. a non-home or foreign network 110, that covers wirelessly the phone 16 and the token 12.

The phone 16 comprises an antenna 166. The antenna 166 allows communicating data, through an LR RF link 19, with a mobile network, like e.g. a home 100 or a foreign 110 network.

The foreign network 110, as a second network, is connected, over a wire link 119, to the GW 120.

The foreign network 110 may include e.g. a GPRS core network that allows a 2G and/or a 3G type network(s) to transmit IP packets to one or several external networks, like e.g. an Internet type network (not represented). The GPRS core network includes a Visited SGSN (or V SGSN) 112.

The foreign network 110 includes one or several (foreign) BTS type entities 111.

The BTS 111 allows exchanging data, over a wireless link 19, with the phone 16 and the token 12.

The foreign network 110, as a visited and a second network, includes a Visited MSC (or V MSC). The V MSC is connected to or integrated within a Visited VLR (or V VLR) that is represented as one and the same network entity 112.

The V MSC 112 is connected, within the foreign network 110, to the BTS 111.

The V MSC 112 is able to route calls, messages and data intended to and/or originating from the subscriber token 12 in the area that is managed by the V MSC 112.

The V MSC 112 is able to carry out handovers between the V MSC 112 to another MSC, be it a V MSC or an MSC.

The V MSC 112 processes any incoming message originating from a terminal, like e.g. the phone 16.

The V MSC 112 serves the phone 16 and the token 12.

The V MSC 112 is able to deliver calls, messages to a subscriber as soon as this latter arrives based on data originating from the V VLR 112.

The V VLR 112 includes another database of subscribers.

The subscriber database includes preferably the IMSI1, as an identifier relating to the token 12 which roams into an area that the V MSC 112 serves and manages through a radio coverage relating to the BTS 111.

Additionally or alternately, the subscriber database may include other information relating to each subscriber, like e.g. a MSISDN, as a number used for identifying the subscriber, authentication data, a service(s) that the subscriber is allowed to access, an HLR address relating to the subscriber, a GPRS access point and/or other data. The GSM service(s) may include an SMS and/or a (phone) call service.

The V VLR 112 updates the database by adding a subscriber that arrives in the area managed through the V VLR 112.

The V VLR 112 is preferably able to delete or remove, under an HLR request, a record relating to a subscriber within a set of subscribers included in the database. The subscriber record includes one or several identifiers relating to the token 12, like e.g. IMSI1.

The V VLR 112 is able to track where the subscriber is within the V VLR area, as a location area, when no call is ongoing.

The V VLR 112 may be connected to the V SGSN (not represented).

The V SGSN is connected to a Visited GGSN (or V GGSN) (not represented), as a router to an Internet type network, as a sub-network. The phone 16 is able to exchange with the V SGSN data packets within its geographical service area. The V SGSN allows routing data packets. The V SGSN stores preferably location information, like e.g. an identified current cell and/or an identified current V VLR 112. The V SGSN allows providing the phone 16 with an IP type communication service.

The server 106 is identified by a URI, like e.g. an URL, and/or an IP type address, as a server identifier(s). The server identifier(s) is(are) stored within the token 12.

The server 106, as an Over-The-Air (or OTA) or Over-The-Internet (or OTI) server, is included within the home network 100.

Alternately, instead of a server included within the home network 100, the server (not represented) is connected to the home network 100.

The server 106 may be operated by a mobile home network operator, as a Mobile Network Operator (or MNO) or a Mobile Virtual Network Operator (or MVNO), a service provider or on its behalf.

The server 106 is hosted by a computer.

The server 106 includes or accesses a memory (not represented) that stores a database.

The server 106 manages the database.

Alternately, another server (not represented) that is connected to the server 106 manages the database.

The database contains a set of one or several identifiers relating to one or several tokens that are, each, associated with one or several identifiers relating to one or several authorized devices, as token host devices.

Alternately or additionally, the database contains a set of one or several identifiers relating to one or several tokens that are, each, associated with one or several identifiers relating to one or several non-authorized devices or the like, as token host devices.

The server 106 is adapted to allow or disallow an access to a home 100 and/or a foreign 110 network(s) for a subscriber who has an identified token that cooperates with an identified device that is or is not authorized to cooperate with the token.

For instance, a correspondence table that is configurable is the following:

| token Identifier | Authorized token host device Identifier |
|---|---|
| IMSI1 | IMEI1 |

For the sake of simplicity, the represented correspondence table, as a part of the database, registers IMSI1, as one identifier relating to the token 12, that is associated with an IMEI1, as an identifier relating to the traffic light 14, as a single device that is authorized to be used with the identified token 12.

The server 106 is configured to receive, for each token, as a client, one or several identifiers relating to a token and one or several identifiers relating to a device, as a token host device.

Alternately, instead of the server 106, another entity, like e.g. a Short Message Service Center (or SMSC) type entity, is configured to receive, for each token, as a client, one or several identifiers relating to a device, as a token host device and then to send to the server 106 information relating to a reception of the device identifier(s).

The server 106 is configured to verify whether the identifier(s) relating to the device is(are) or is(are) not authorized to be used in association with the identifier(s) relating to the token to access the first network 100. The server 106 detects thus that an identified cooperating device is or is not authorized to cooperate with the identified token.

The server 106 (or another server) is configured to send, only if the identifier(s) relating to the device is(are) not authorized to be used in association with the identifier(s) relating to the token, to an HLR 104 information relating to an attachment to the server 106 (or another server) accompanied with the identifier(s) relating to the token.

The server 106 informs the HLR 104 that the identified token is already attached to the server (or the like), as a fake (network) attachment. Such a fake attachment allows discharging or freeing, under an HLR 104 control, the V VLR 112 (or the VLR 102) that should have been in charge, instead of the server 106 (or another server) of the token. The server 106 (alone or with another server) plays a role of a fake VLR.

The server 106 is configured to intercept a network attachment request to the first 100 or second 110 network accompanied with one or several identifiers relating to the token 12. The network attachment request originates from the V VLR 112 (or the VLR 102) and is addressed to the HLR 104. The server 106 (alone or with another server) plays a role of a proxy-HLR.

The server 106 is configured not to forward to the HLR 104 the network attachment request.

The server 106 is configured to send to the V VLR 112 (or the VLR 102) predetermined first information that allows to forbid an attachment by the (unauthorized) device, through the token 12, to the first 100 or second 110 network.

**Figure 2** depicts an exemplary embodiment of the invention method 20 for managing a subscriber to a home network 100.

It is assumed that the token 12 is connected firstly to the traffic light 14. The traffic light 14 stores the IMEI1, as an identifier relating to the traffic light 14. The token 12 cooperates with the traffic light 14, as an authorized (token host) device, so as to identify and preferably authenticate to the home network 100.

It is further assumed that the token 12 stores the IMSI1, as an identifier relating to the token 12, and the IMEI1, as an identifier relating to the last previously active authorized device. The token 12 has preferably authenticated successfully to the home network 100 while cooperating with the traffic light 14.

It is further assumed that the token 12 is removed from the traffic light 14 and inserted in the phone 16 that stores the IMEI2, as an identifier relating to the phone 16. The phone 16 and the token 12 are covered by the foreign network 110.

Firstly, the phone 16 and the token 12 are powered on.

The token 12 receives from the phone 16 a message 22 including the IMEI2 (preferably after a token request (not represented)).

Optionally, the token 12 compares (not represented) the IMEI2, as the identifier relating to the (current token host) device, to the IMEI1, as the identifier relating to the last previously active authorized device.

Since the IMEI2 is distinct from the IMEI1, the token 12 sends, at its initiative, through the phone 16 and the V VLR 112, as the covering VLR relating to the foreign network 110, to the server 106 a message 24 including the IMSI1 and the IMEI2.

Alternatively (not represented), if the received message does not include the IMSI1, the token 12 sends, through the phone 16, the V VLR 112, as the covering VLR relating to the foreign network 110, and the home network 100, to an SMSC (not represented) relating to the home network 100 an SMS type message including the IMEI2. The SMSC sends to the server 106 a message, like e.g. a Short Message Peer-to-Peer (or SMPP) type message, including information relating to a reception of the MSISDN relating to an SMS originator and the IMEI2 along with the IMEI2, as the SMS content.

According to such an alternative embodiment, the information relating to a reception of the MSISDN relating to the SMS sender and the IMEI2 along with the IMEI2 may be further accompanied with predetermined credentials, like e.g. a code, to be used to address securely the server 106. If the received credentials do not match the expected credentials, then the server 106 forbids to go further. Otherwise, namely if the received credentials match expected credentials, the server 106 authorizes to go further.

According to such an alternative embodiment, optionally when authorized to go further, the server 106 queries the HLR 104 by using a message, like e.g. a SendRoutingInformation_Short Message (or SRI_SM), including the received MSISDN to get the corresponding associated IMSI1. The HLR 104 sends to the server 106 a message including the IMSI1, as a request response.

The network entities exchange data by using a Mobile Application Protocol (or MAP) type protocol or the like. The network entities may exchange by using any kind of communication protocol.

The server 106 verifies 26 whether the IMEI2 is or is not authorized to be used in association with the IMSI1, so as to access the home network 100.

A list of the authorized IMEI(s), as a white list, and/or a list of the unauthorized IMEI(s), as a black list, is(are) not accessible from outside. Thus, a possible fraudster is not able to access and modify any white and/or black list(s), so as to re-configure her or his device as an authorized device.

If the IMEI2 is authorized to be used in association with the IMSI1, then the server 106 authorizes the token 12 to cooperate with the concerned device, as an authorized device, i.e. without letting the V VLR 112 remove the IMSI1 from the database and thus letting the token 12 to attach to the foreign 110 (or home 100) network.

Otherwise, i.e. if the IMEI2 is not authorized to be used in association with the IMSI1, the server 106 sends to the HLR 104 a message 28 including information relating to an attachment to the server 106 (or another server) along with the IMSI1. Then, the HLR 104 sends to the V VLR 112 a removal request 210 for removing the IMSI1 from the database accompanied with the IMSI1. The removal request 210 is preferably compliant with a standard, like e.g. the 3GPP TS 29.002 v.6.11.0 Release 6 section 8.1.3. and TS 29.02 and is of the type the MAP-CANCEL LOCATION with IMSI1.

According to another embodiment, instead of addressing directly the V VLR 112, the HLR 104 sends, through the server 106 (or another server), a removal request for removing the IMSI1 from the database accompanied with the IMSI1. The server 106, as a proxy-HLR, sends to the V VLR 112 a removal request for removing the IMSI1 from the database accompanied with the IMSI1.

The V VLR 112 removes the IMSI1 from the database.

The phone 16 in cooperation with the token 12 may then attempt to attach to the foreign network 110.

The token 12 sends, through the phone 16, to the V VLR 112 an attachment request 212 for attaching to the home network 100 (or the foreign network 110) accompanied with the IMSI1.

The V VLR 112 receives thus from the V MSC a location updating message including a subscriber location update, like e.g. an Update Location (or UL) or an Update GPRS Location (or UGL), accompanied with the IMSI1. Such a location updating message allows the HLR 104 to know that the phone 16 in association with the token 12 is able to attach to the foreign network 110 and to authorize or forbid (refuse or cancel) to attach to the foreign network 110. Such a location updating message is intended to the HLR 104 relating to the home network 100. The location updating message is preferably compliant with a standard, like e.g. the 3GPP TS 29.002 v.6.11.0 Release 6 section 8.1.2. and TS 29.02 and is of the type the MAP-UPDATE LOCATION request with IMSI1.

The V VLR 112 sends, through the server 106 (or another server), to the HLR 104 a network attachment request 214 for attaching, through the foreign network 110, to the home network 100 accompanied with the IMSI1.

The server 106, as a proxy-HLR, intercepts the network attachment request 214 and recognizes the IMSI1, as token identifier, and knows that the current cooperating identified token host device is not authorized. The server 106 does not forward to the HLR 104 the network attachment request (represented with a crossed dashed partial line 215 that does not reach the HLR 104).

The server 106 forbids 216 a network attachment by the phone 16, as an unauthorized token host device, through the token 12 and the foreign network 110, to the home network 100.

The server 106 sends to the V VLR 112 a rejection message 218 including predetermined first information, like e.g. a rejection error code. The rejection message is preferably compliant with a standard, like e.g. the 3GPP TS 29.002 v.6.11.0 Release 6 paragraph 8.1.2. and is of the type the MAP-UPDATE LOCATION response with a rejection error code. The rejection error code may be as further specified in the 3GPP TS 29.002 v.6.11.0 Release 6 paragraph 8.1.2.3. The error code may be at least one of the following error codes:
- MAP error "Unexpected data value";
- MAP error "roaming not allowed";
- MAP error "System failure".

The first information does not allow preferably the token 12 to authenticate to the home network 100. Such first information allows forbidding an attachment by the phone 16, through the token 12 and the foreign network 110, to the home network 100.

Optionally, the V VLR 112 sends to the token 12 a message 220 including information about a (network) attachment rejection, as a response to the (network) attachment request 212 sent by the token 12.

According to a particular embodiment, the token 12 is thus not able to receive any challenge that has to be received by the token 12 to issue a ciphered challenge, as request response. Accordingly, the token 12 is not able to authenticate to the home network 100.

The token 12 is not able to attach, through the foreign network 110, to the home network 100. The token 12 is thus rendered useless to get access to the home network 100 or the foreign network 110. The token 12 becomes therefore invalid.

The token 12 that has been stolen or the like and inserted in an unauthorized or inappropriate device is thus disallowed to access the foreign 110 or home 100 network.

The invention solution allows detecting and rejecting, in an automatic, quick and efficient manner, a fraudulent or inappropriate use of a token in cooperation with an unauthorized or inappropriate device.

The invention solution is user friendly since there is no need of any manual intervention at an HLR type device.

The invention solution is simple and therefore cheap to implement since one link to the HLR type device is to be monitored.

The invention solution is compatible with notably the existing mobile network infrastructures and the existing exchanged messages between the network entities.

The invention solution offers a real time rejection process since it is based on an interception of a network attachment request message that is exchanged between the VLR type entity and the HLR type entity once the server has detected that the (token host) device is not authorized during an attachment process.

Alternately, instead of being implemented by a single server, two servers implement the invention method in which, prior to intercepting the network attachment request, an unauthorized device detection server sends to a proxy-HLR server second information, like e.g. "IMSI1 forbidden", relating to a refusal or rejection attachment by the device, through the token, to the foreign or home network.

According to another embodiment, instead of being implemented by network entities relating to the GSM and/or UMTS network(s), the network entities relate to a Long Term Evolution (or LTE) type network(s). Among others, a Home Subscriber Server (or HSS) relating to the LTE network replaces the HLR relating to the GSM and/or UMTS network(s) and a Mobility Management (or MME) entity relating to the LTE network replaces the MSC relating to the GSM and/or UMTS network(s) while the server remains unchanged.

## Claims

1. A method for managing a subscriber to a first network (100),
**characterized in that** the method comprises the following steps:
- a token (12) is coupled or connected to a device (16);
- the token determines and sends at least one identifier (24) relating to the device, through the first or a second (110) network, to a first server (106);
- the first server receives at least one identifier relating to the token and the at least one identifier relating to the device;
- the first server verifies (26) whether the at least one identifier relating to the device is or is not authorized to be used in association with the at least one identifier relating to the token;
- only if the at least one identifier relating to the device is not authorized, the first server or a second server sends to a Home Location Register or HLR type entity (104) information (28) relating to an attachment to the first or the second server accompanied with the at least one identifier relating to the token;
- the HLR type entity sends to a Visitor Location Register or VLR type entity (112) a removal request (210) for removing the identifier relating to the token from a database accompanied with the at least one identifier relating to the token;
- the token sends to the VLR type entity an attachment request (212) for attaching to the first or the second network accompanied with the at least one identifier relating to the token;
- the VLR type entity sends, through the first or the second server, to the HLR type entity a network attachment request (214) for attaching to the first or the second network accompanied with the at least one identifier relating to the token;
- the first or the second server intercepts the network attachment request without forwarding to the HLR type entity the network attachment request; and
- the first or the second server sends to the VLR type entity predetermined first information (218), the first information allowing to forbid an attachment by the device, through the token, to the first or the second network.

2. Method according to claim 1, wherein, the token being likely to cooperate with at least one predetermined authorized device (14), the token storing at least one identifier relating to each of the at least one predetermined authorized device, prior to sending the at least one identifier relating to the device, the method further comprises the following steps:
- the token compares at least one identifier relating to the device to the identifier relating to each of the at least one predetermined authorized device;
- only if the at least one identifier relating to the device does not match any of the at least one identifier relating to the at least one predetermined authorized device, the token sends, through the first or the second network, to the first server the at least one identifier relating to the device.

3. Method according to claim 1, wherein, the token being likely to cooperate with at least one predetermined authorized device (14), the token storing at least one identifier relating to a last previously active authorized device, prior to sending the at least one identifier relating to the device, the method further comprises the following steps:
- the token compares the at least one identifier relating to the device to the at least one identifier relating to the last previously active authorized device;
- only if the at least one identifier relating to the device does not match any of the at least one identifier relating to the last previously active authorized device, the token sends, through the first or the second network, to the first server the at least one identifier relating to the device.

4. Method according to any of claims 1 to 3, wherein the token sends, through at least the first network, to, instead of the first server, a Short Message Service Center or SMSC type entity, a Short Message Service or SMS type message including the at least one identifier relating to the device and the SMSC type entity sends to the first server information relating to a reception of the at least one identifier relating to the device.

5. Method according to claim 4, wherein the information relating to a reception of the at least one identifier relating to the device is further accompanied with predetermined credentials to be used to address the first server.

6. Method according to any of claims 1 to 5, wherein the HLR type entity sends, through the first or the second server, to the VLR type entity the removal request accompanied with the at least one identifier relating to the token.

7. Method according to any of claims 1 to 6, wherein, prior to intercepting the network attachment request, the method further comprises the following step:
- the first server sends to the second server predetermined second information, the second information being related to a refusal of an attachment by the device, through the token, to the first or the second network.

8. Method according to any of claims 1 to 7, wherein the first information does not allow the token to authenticate to the first network.

9. A server (106) for managing a subscriber to a first network (100), **characterized in that** the server is configured:
- to receive at least one identifier relating to the token and at least one identifier (24) relating to the device;
- to verify (26) whether the at least one identifier relating to the device is or is not authorized to be used in association with the at least one identifier relating to the token;
- to send, only if the at least one identifier relating to the device is not authorized, to a Home Location Register or HLR type entity (104) information relating to an attachment to the first or the second server accompanied with the at least one identifier relating to the token;
- to intercept a network attachment request (214) for attaching to the first or the second network accompanied with the at least one identifier relating to the token, the network attachment request originating from a Visitor Location Register or VLR type entity (112) and being addressed to the HLR type entity;
- not to forward to the HLR type entity the network attachment request; and
- to send to the VLR type entity predetermined first information (218), the first information allowing to forbid an attachment by the device, through the token, to the first or the second network.

10. A system for managing a subscriber to a first network (100),
**characterized in that**, the system comprising at least one server (106) and a token (12), the token is configured to:
- be coupled or connected to a device (16);
- determine and send at least one identifier (24) relating to the device, through the first or a second (110) network, to a first server;
**in that** the at least one server is configured to:
- receive at least one identifier relating to the token and at least one identifier relating to the device;
- verify (26) whether the at least one identifier relating to the device is or is not authorized to be used in association with the at least one identifier relating to the token;
- send, only if the at least one identifier relating to the device is not authorized, to a Home Location Register or HLR type entity (104) information (28) relating to an attachment to the first or the second server accompanied with the at least one identifier relating to the token;
**in that** the token is configured to send to a Visitor Location Register or VLR type entity an attachment request (212) for attaching to the first or the second network accompanied with the at least one identifier relating to the token;
**in that** the at least one server is configured:
- to intercept a network attachment request (214) for attaching to the first or the second network accompanied with the at least one identifier relating to the token, the network attachment request originating from the VLR type entity and being addressed to the HLR type entity;
- not to forward to the HLR type entity the network attachment request; and
- to send to the VLR type entity predetermined first information (218), the first information allowing to forbid an attachment by the device, through the token, to the first or the second network.
